Europäisches Patentamt

European Patent Office

Office européen des brevets

(11) Publication number: **0 268 332 B1**

## EUROPEAN PATENT SPECIFICATION

(45) Date of publication of patent specification: **04.03.92**   (51) Int. Cl.⁵: **H04N 5/14**, H04N 5/208

(21) Application number: **87202192.8**

(22) Date of filing: **11.11.87**

(54) **Method and apparatus for generating an adaptive peaking signal increasing the sharpness of a video signal.**

(30) Priority: **14.11.86 US 931385**

(43) Date of publication of application:
**25.05.88 Bulletin 88/21**

(45) Publication of the grant of the patent:
**04.03.92 Bulletin 92/10**

(84) Designated Contracting States:
**DE FR GB**

(56) References cited:
**GB-A- 1 299 842**
**GB-A- 2 044 576**
**US-A- 3 708 753**
**US-A- 3 743 766**

(73) Proprietor: **North American Philips Corporation**
**100 East 42nd Street 9th Floor**
**New York, N.Y. 10017(US)**

(72) Inventor: **Skinner, Kenneth Romayn**
**c/o INT. OCTROOIBUREAU B.V. Prof. Holstlaan 6**
**NL-5656 AA Eindhoven(NL)**
Inventor: **Hitchcock, James Edward**
**c/o INT. OCTROOIBUREAU B.V. Prof. Holstlaan 6**
**NL-5656 AA Eindhoven(NL)**

(74) Representative: **Kooiman, Josephus Johannes Antonius et al**
**INTERNATIONAAL OCTROOIBUREAU B.V.**
**Prof. Holstlaan 6**
**NL-5656 AA Eindhoven(NL)**

## Description

The present invention relates to apparatus for generating an adaptive peaking signal, comprising

first means for receiving an incoming video signal having an amplitude varying as a function of time, and generating a first peaking signal (D) varying at least in part in dependence upon said amplitude of said incoming video signal at a predetermined first and second time instant.

The invention also relates to a method for generating an adaptive peaking signal.

Apparatus of the above mentioned kind is known from US patent US-A-3.743.766. In such known television apparatus, peaking signals are added to the video signals to improve the sharpness of either vertical and/or horizontal transitions. Generally, the user sets the sharpness control to achieve a pleasing picture for mid range transitions. The adjustment is generally made so that low to medium level detail areas of a scene, such as leaves on a tree, fabric texture, facial lines, etc., are peaked for pleasing viewing. However, at this setting of the peaking control the areas of the scene having large amplitude video transitions, such as the edges of text characters, are over-peaked. Spot blooming can also occur on large white going overshoots.

It is an object of the present invention to eliminate or substantially decrease the over-peaking and spot blooming mentioned above without, however, substantially affecting the detail in the low to medium transition areas of the scene.

The invention is based on the realization that the above-mentioned undesired effects are due to the conventional method of generating the peaking signal, i.e. conventionally this signal is dependent on both the rate of change and the amplitude of the video transition. A peaking signal less dependent on transition amplitude would tend to decrease over-peaking and spot blooming.

To accomplish this end, the apparatus according to the invention is characterized by

second means connected to said first peaking signal generating means for generating a peaking factor signal varying at least partly in accordance with the difference (CA) between said amplitudes at said first and second time instants; and

third means for multiplying said first peaking signal and said peaking factor signal, thereby creating said adaptive peaking signal (P) with decreased overpeaking at the large signal transitions. Consequently the conventional (first) peaking signal is modified by multiplying it by an adaptive peaking factor signal. Preferably in deriving the conventional peaking signal, the incoming video signal is delayed by a first time delay and a second time delay. Since both the incoming and the second delayed signal are readily available, the present invention teaches the subtraction of one from the other of the signals. The magnitude of the so-derived difference signal is multiplied by a constant, the product is subtracted from a second constant, preferably unity, and the resultant factor is used to multiply the conventional peaking signal.

Alternatively, the square of the difference signal can be substituted for the magnitude of the difference signal.

The present invention, as well as other objects and implementations thereof, will be more readily understood upon reference to the following description taken in conjunction with the accompanying drawing.

FIGURE 1 is a block diagram illustrating the present invention as interconnected with a conventional vertical peaking circuit;

FIGURE 2 is a plot of peaking signal as a function of transition amplitude at various values of K; and

FIGURE 3 is a graphic representation of the method of the present invention.

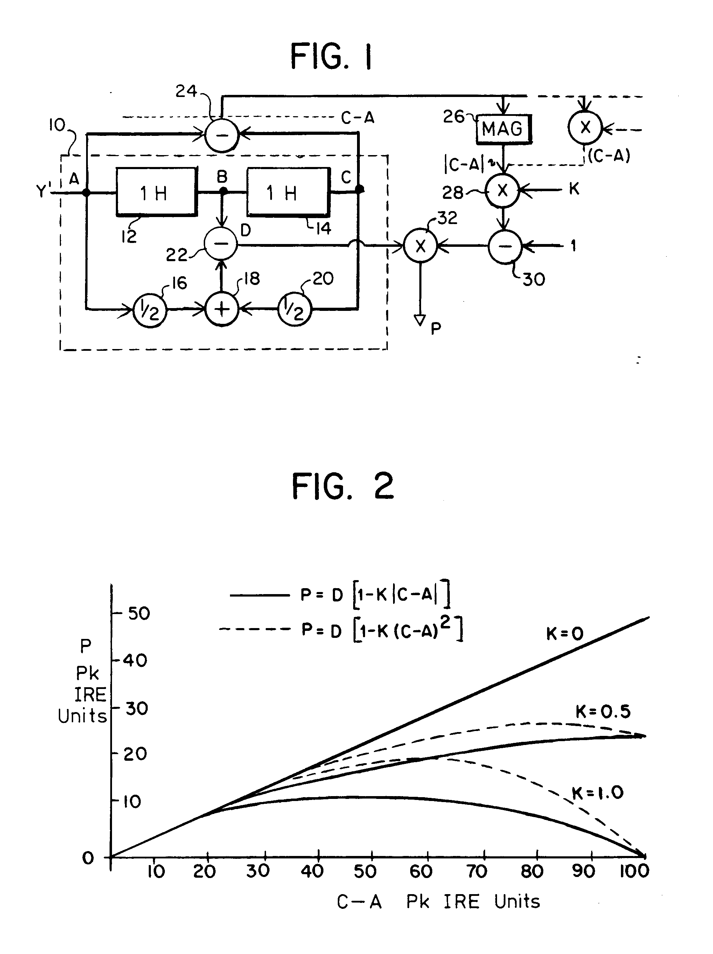

The circuit for generating the conventional peaking signal, i.e. signal to be added to the video signal to increase its sharpness is denoted by reference numeral 10 in FIGURE 1 and enclosed in dashed lines. Block 10 generates a peaking signal for vertical peaking. The incoming video signal, e.g. the luminance signal in a colour television receiver, is received at a terminal A. Terminal A is connected through a 1H delay 12 to a terminal B. Terminal B in turn is connected through a 1H, i.e. a one line, delay 14 to a terminal C. Further, terminal A is connected through a divider circuit 16 which divides its amplitude in two, to one terminal of a summing circuit 18. The other terminal of summing circuit 18 is connected to terminal C through a second divider circuit 20. The output of summing circuit 18 is connected to one input of a subtraction circuit 22 whose other input is connected to terminal B. The conventional peaking component signal is furnished at output terminal D of subtraction circuit 22.

It should be noted that the conventional circuit and the present invention can be implemented in either analog and digital form. Thus, dividers may be implemented as voltage dividers or operational amplifiers, summing circuits may be operational amplifiers, and the delay circuits may be standard 1H delay lines for an analog implementation. For digital implementations, divider circuits which divide by a half can be shift circuit. The same is true for delay circuits. Addition and subtraction circuits are standard digital circuits well known to anyone skilled in the art.

To implement the present invention, terminals A and C are connected to respective input terminals of a subtraction circuit 24. The output of subtraction circuit 24 is connected to a circuit generating the magnitude of this signal, i.e. the amplitude independent of sign. This circuit is denoted by reference numeral 26. The output of block 26 is multiplied by a constant factor K in a multiplier circuit 28. The output of multiplier circuit 28 is subtracted from unity in a subtraction circuit 30. The output of subtraction circuit 30 is applied to one input of a multiplying circuit 32. The other input of multiplying circuit 32 receives the conventional peaking signal. The output of multiplying circuit 32 is the adaptive peaking signal of the present invention.

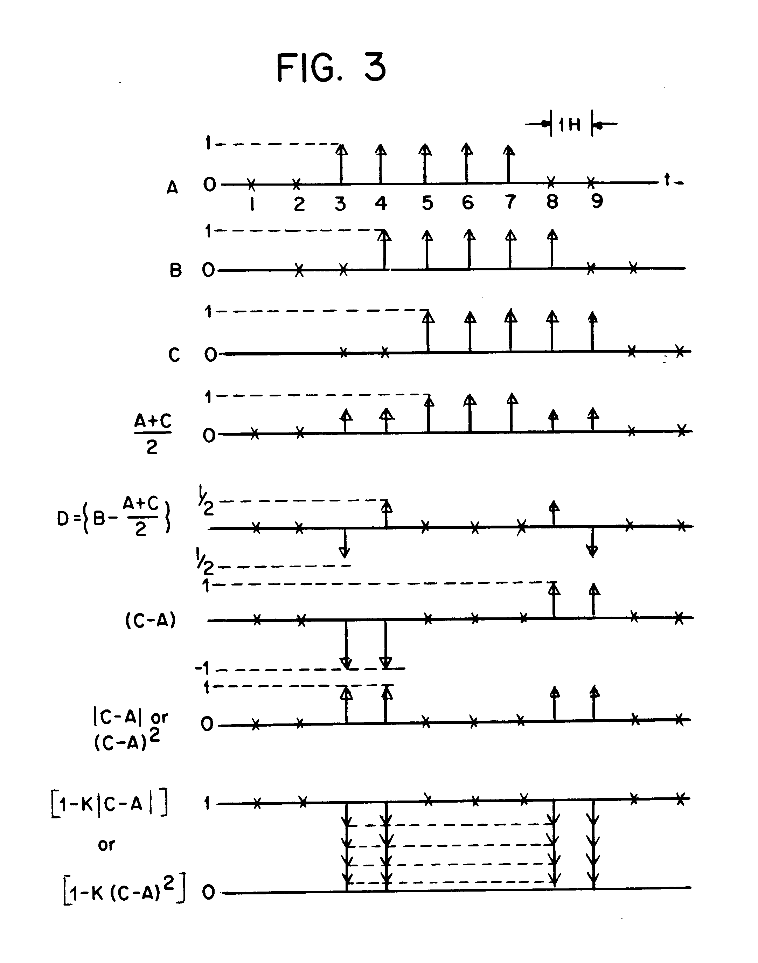

The operation of the above described circuit will now be described with reference also to FIGURE 3.

In FIGURE 3, the incoming video signal at terminal A is illustrated in the correspondingly marked line A. Similarly, the signals at terminals B and C are shown on lines B and C of FIGURE 3.

It is assumed that the signal received at terminal A is zero or black for the time intervals corresponding to lines 1 and 2. At line 3, a full transition to white occurs. The full white value remains until line 7 where it changes back to full back after expiration of another 1H time interval.

In line B, same signal is shown, but delayed by one line interval. Similarly, the signal on line C is the same signal as that on line A, but delayed by two line intervals. The variation of $A + C/2$ is illustrated in the fourth line. The resulting conventional peaking signal is illustrated in the fifth line of FIGURE 3. It should be noted that this conventional peaking signal is added to the signal at terminal B to form the peaked luminance signal. This is also true of the peaking component signal as modified by the adaptive circuit of the present invention.

Returning now to FIGURE 3, it is noted that the addition of the conventional peaking signal as shown in line 5 to the signal of line B would, for a positive-going transition as illustrated in line A, result first in the addition of a component tending to drive the signal of the line B in the opposite direction, i.e. towards a blacker level. In the subsequent H line, the peaking signal reverses and results in an addition to the signal on line B which drives in the same direction as the transition, i.e. the signal on line B is driven to an even whiter level. Since the signal was already at full white, this additional peaking component could cause it to be over-peaked or to bloom. The increase in the spot size resulting from the over-peaking would cause a definite deterioration of picture quality. Similarly, when a transition from white to black takes place in horizontal lines 8-9, the full white luminance signal of line B is augmented by a peaking signal having an amplitude of one half in H line 8, while the black signal in H line 9 is driven further in the black direction. While an improvement in sharpness would result by the increased difference between the luminance signal amplitude in H line 8 and 9, the blooming caused by the substantial over-peaking in line 8 is undesirable. It should be noted that the effect of a fully black (i.e. tube cut-off) luminance signal is not changed by the addition of a peaking signal. The value of the delay luminance signal in H line 9 should thus be thought of as somewhat less than full black.

As can be seen with reference to the last two pairs of lines in FIGURE 3, the over-peaking is substantially decreased or may be eliminated by use of the adaptive component of the present invention. The bottom pair of lines in FIGURE 3 indicate the multiplication factor (adaptive peaking factor signal) which is to be applied to the conventional peaking signal present at terminal D of FIGURE 1 and illustrated in the correspondingly marked line in FIGURE 3. The multiplication factor is between 0 and 1, depending on the value of K. For K = 0 the multiplication factor would be 1, i.e. the conventional peaking signal would be added to the signal of line B. If the value of the constant K is taken, for example, to be .5, the peaking signal in line 5 would be multiplied by one half. Signal B would still be decreased prior to a positive-going transition and increased upon occurrence of the transition, thereby increasing the difference in luminance signal amplitude from one H line to the next and thus the vertical sharpness of the picture; but the over-peaking at the large transition would be substantially decreased. For K = 1, no peaking signal would result when $|C-A| = 1$, i.e. no over-peaking would occur for large luminance signal amplitude changes.

It should be noted that the above discussion holds true as well if the magnitude of C-A is replaced by $(C-A)^2$. This is indicated by dashed lines in FIGURE 1.

The effect of changes in the value of K of different values of C-A is illustrated in FIGURE 2. The solid lines in FIGURE 2 represent the variation of the peaking signal as a function of C-A when the magnitude of C-A is used in deriving the adaptive component. The dashed lines are the same plots when the value of $(C-A)^2$ is used. It will be noted that the adapted peaking signal P actually goes to zero for a differential signal representing the maximum change (black to white or white to black), but approaches the normal peaking signal at low- to mid-level changes. The value chosen for K may be chosen empirically and will generally fall somewhere between K = 1 and K = 0.5. It is desirable to provide some peaking for the maximum change of (C-A), but to keep this peaking below that which would cause spot blooming of the particular display device.

It is thus seen that with the present invention the problems of over-peaking and spot blooming at high level transitions can be avoided without sacrificing the benefits of increased sharpness at low and mid level transitions.

## Claims

1. Apparatus for generating an adaptive peaking signal, comprising

   first means (10) for receiving an incoming video signal having an amplitude varying as a function of time, and generating a first peaking signal (D) varying at least in part in dependence upon said amplitude of said incoming video signal at a predetermined first and second time instant, characterized by

   second means (24, 26, 28, 30) connected to said first peaking signal generating means (10) for generating a peaking factor signal varying at least partly in accordance with the difference (C-A) between said amplitudes at said first and second time instants; and

   third means (32) for multiplying said first peaking signal and said peaking factor signal, thereby creating said adaptive peaking signal (P) with decreased overpeaking at the large signal transitions.

2. Apparatus as set forth in claim 1, wherein said first means comprises

   fourth means (12, 14) for delaying said incoming video signal (A) by a first time delay and by a second time delay exceeding said first time delay, thereby generating a first time delayed signal (B) and a second time delayed signal (C); and

   wherein said peaking factor signal varies in accordance with the difference in amplitude between said incoming video signal (A) and said second time delayed signal (C).

3. Apparatus as set forth in claim 2, wherein said second means comprises means (24) for furnishing a subtraction signal corresponding to the difference in amplitude between said second time delayed signal and said incoming video signal, means for furnishing a predetermined reference value signal (1), and means (30) for subtracting said subtraction signal from said predetermined reference value signal.

4. Apparatus as set forth in claim 3, further comprising means (26) connected to said subtraction signal furnishing means (24) for generating a magnitude signal corresponding to the magnitude of the difference in amplitude between said second time delayed signal and said incoming video signal.

5. Apparatus as set forth in claim 4, further comprising means (28) connected to said magnitude signal generating means (26) for multiplying said magnitude signal by a constant (K).

6. Apparatus as set forth in claim 1, wherein said means for combining said first peaking signal and said peaking factor signal comprises a multiplier circuit (32).

7. Method for generating an adaptive peaking signal, comprising the steps of

   receiving an incoming video signal (A) having an amplitude varying as a function of time; and

   generating a first peaking signal in response thereto; characterized by

   generating a peaking factor signal varying at least in part in accordance with the difference in amplitude of said received video signal at a first and second predetermined time instant; and

   multiplying said peaking factor signal and said first peaking signal, thereby generating said adaptive peaking signal (P) with decreased over-peaking at the large signal transitions.

8. Method as set forth in claim 7, wherein said step of generating said first peaking signal comprises the step of receiving said incoming video signal (A) and delaying said incoming video signal by a first time delay and a second time delay exceeding said first time delay, thereby generating a first (B) and second (C) time delayed signal and the step of subtracting said incoming video signal and said second time delayed signal from said first time delayed signal, characterized in that said step of generating said peaking factor signal comprises generating a subtraction signal varying in accordance with the difference in amplitude between said second time delayed signal (C) and said incoming video signal (A).

## Revendications

1. Appareil pour produire un signal de correction adaptative comprenant :

   des premiers moyens (10) pour recevoir un signal vidéo d'entrée présentant une amplitude variant en fonction du temps, et pour générer un premier signal de correction (D) variant au moins en partie en fonction de l'amplitude du signal vidéo d'entrée à un premier et un second instant prédéterminés, caractérisé par :

des seconds moyens (24, 26, 28, 30) connectés aux premiers moyens pour générer le premier signal de correction pour produire un signal de facteur de correction variant au moins partiellement selon la différence (C-A) entre les amplitudes au premier et au second instant; et

des troisièmes moyens (32) pour multiplier le premier signal de correction et le signal de facteur de correction, créant ainsi le signal de correction adaptative (P) avec une surcorrection réduite au niveau des fortes transitions de signaux.

2. Appareil suivant la revendication 1, dans lequel les premiers moyens comprennent :

des quatrièmes moyens (12, 14) pour retarder le signal vidéo entrant (A) d'un premier retard et d'un second retard excédant le premier, pour produire ainsi un premier signal retardé (B) et un second signal retardé (C), et

dans lequel le signal de facteur de correction varie en fonction de la différence d'amplitude entre le signal vidéo entrant (A) et ledit second signal retardé (C).

3. Appareil suivant la revendication 2, dans lequel les seconds moyens comprennent des moyens (24) servant à fournir un signal de soustraction correspondant à la différence d'amplitude entre le second signal retardé et le signal vidéo entrant, des moyens servant à fournir un signal d'une valeur de référence prédéterminée (1) et des moyens (30) pour soustraire le signal de soustraction d'un signal de valeur de référence prédéterminé.

4. Appareil suivant la revendication 3, comprenant, en outre, des moyens (26) connectés aux moyens fournissant le signal de soustraction (24) pour produire un signal de grandeur correspondant à la grandeur de la différence d'amplitude entre le second signal retardé et le signal vidéo entrant.

5. Appareil suivant la revendication 4, comprenant, en outre, des moyens (28) connectés aux moyens générateurs de signal de grandeur (26) pour multiplier ce signal de grandeur par une constante (K).

6. Appareil suivant la revendication 1, dans lequel les moyens servant à combiner le premier signal de correction et le signal de facteur de correction comprennent un circuit multiplicateur (32).

7. Procédé pour produire un signal de correction adaptative comprenant les stades suivants :

la réception d'un signal vidéo entrant (A) ayant une amplitude variant en fonction du temps, et

la production d'un premier signal de correction en réponse à cette réception, caractérisé par :

la génération d'un signal de facteur de correction variant au moins en partie en fonction de la différence d'amplitude de ce signal vidéo reçu à un premier et un second instant prédéterminés, et

la multiplication de ce signal de facteur de correction par le premier signal de correction pour produire ainsi le signal de correction adaptative (P) avec une surcorrection réduite aux fortes transitions de signaux.

8. Procédé suivant la revendication 7, dans lequel le stade de la production du premier signal de correction comprend le stade de la réception du signal vidéo entrant (A) et du retard de ce signal vidéo entrant d'un premier retard et d'un second retard excédant le premier, pour produire ainsi un premier (B) et un second (C) signal retardé, et le stade de la soustraction de ce signal vidéo entrant et du second signal retardé du premier signal retardé, caractérisé en ce que le stade de la production du signal de facteur de correction comprend la production d'un signal de soustraction variant en fonction de la différence d'amplitude entre le second signal retardé (C) et le signal vidéo entrant (A).

**Patentansprüche**

1. Schaltungsanordnung zum Erzeugen eines anpassbaren Anhebungssignals mit

ersten Mitteln (10) zum Empfangen eines eintreffenden Video-Signals mit einer sich als Funktion de Zeit ändernden Amplitude und zum Erzeugen eines sich Wenigstens teilweise abhängig von der genannten Amplitude des genannten eintreffenden Video-Signals zu einem vorbestimmten ersten und zweiten Zeitpunkt, ändernden ersten Anhebungssignals (D), gekennzeichnet durch

zweite Mittel (24, 26, 28, 30), die mit den genannten ersten Anhebungssignalerzeugungsmitteln (10) zum Erzeugen eines sich wenigstens teilweise entsprechend der Differenz (C-A) zwischen den genannten Amplituden zu dem genannten ersten und zweiten Zeitpunkt ändernden Anhebungsfaktorsignals verbunden sind; und

dritte Mittel (32) zum Multiplizieren des genannten ersten Anhebungssignals und des genannten Anhebungsfaktorsignals, wobei das genannte anpassbare Anhebungssignal (P) mit verringerter Überanhebung bei den großen Signalübergängen erzeugt wird.

2. Schaltungsanordnung nach Anspruch 1, wobei die genannten ersten Mittel vierte Mittel (12, 14) aufweisen zum Verzögern des genannten eintreffenden Video-Signals (A) um eine erste Zeitverzögerung und um eine zweite, die genannte erste Zeitverzögerung überschreitende Zeitverzögerung, wobei ein erstes zeitverzögertes Signal (B) und ein zweites zeitverzögertes Signal (C) erzeugt wird; und

wobei das genannte Anhebungsfaktorsignal sich entsprechend der Amplitudendifferenz zwischen dem genannten eintreffenden Video-Signal (A) und dem genannten zweiten zeitverzögerten Signal (C) ändert.

3. Schaltungsanordnung nach Anspruch 2, wobei die genannten zweiten Mittel Mittel (24) aufweisen zum Liefern eines Subtrahiersignals entsprechend der Amplitudendifferenz zwischen dem genannten zweiten zeitverzögerten Signal und dem genannten eintreffenden Video-Signal, Mittel zum Liefern eines vorbestimmten Bezugswertsignals (1), und Mittel (30) zum Subtrahieren des genannten Subtrahiersignals von dem genannten vorbestimmten Bezugswertsignals.

4. Schaltungsanordnung nach Anspruch 3, weiterhin mit Mitteln (26), die mit den genannten das Subtrahiersignal liefernden Mitteln (24) verbunden sind zum Erzeugen eines Größensignals entsprechend der Größe der Differenz zwischen dem genannten zweiten zeitverzögerten Signal und dem genannten eintreffenden Video-Signal.

5. Schaltungsanordnung nach Anspruch 4, weiterhin mit Mitteln (28), die mit den genannten das Größensignal erzeugenden Mitteln (26) verbunden sind zum Multiplizieren des genannten Größensignals mit einer Konstanten (K).

6. Schaltungsanordnung nach Anspruch 1, wobei die genannten Mittel zum Kombinieren des genannten ersten Anhebungssignals und des genannten Anhebungsfaktorsignals eine Multiplizierschaltung (32) aufweisen.

7. Verfahren zum Erzeugen eines anpassbaren Anhebungssignals, das die nachfolgenden Verfahrensschritte aufweist:

das Empfangen eines eintreffenden Video-Signals (A) mit einer sich als Funktion de Zeit ändernden Amplitude und

das Erzeugen eines ersten Anhebungssignals in Antwort darauf, gekennzeichnet durch

das Erzeugen eines sich wenigstens teilweise entsprechend der Differenz zwischen dem genannten empfangenen Video-Signal zu einem ersten und zweiten vorbestimmten Zeitpunkt ändernden Anhebungsfaktorsignals und

das Multiplizieren des genannten Anhebungsfaktorsignals mit dem genannten ersten Anhebungssignal, wobei das genannte adaptive Anhebungssignal (P) mit verringerter Überanhebung bei den großen Signalübergängen erzeugt wird.

8. Verfahren nach Anspruch 7, wobei der genannte Verfahrensschritt der Erzeugung des genannten ersten Anhebungssignals den Verfahrensschritt des Empfangs des genannten eintreffenden Video-Signals (A) und der Verzögerung des genannten eintreffenden Video-Signals um eine erste Zeitverzögerung und eine zweite die erste Zeitverzögerung überschreitende Zeitverzögerung aufweist, wobei ein erstes (B) und ein zweites (C) zeitverzögertes Signal erzeugt wird, sowie den Verfahrensschritt der Subtrahierung des genannten eintreffenden Video-Signals und des genannten zweiten zeitverzögerten Signals von dem genannten ersten zeitverzögerten Signal, dadurch gekennzeichnet, daß der genannte Verfahrensschritt der Erzeugung des genannten Anhebungsfaktorsignals die Erzeugung eines sich entsprechend der Differenz in der Amplitude zwischen dem genannten zweiten zeitverzögerten Signal (C) und dem genannten eintreffenden Video-Signal (A) ändernden Subtrahiersignals umfaßt.

# FIG. 1

# FIG. 2

# FIG. 3